# DEMANDE DE BREVET EUROPEEN

(11) **EP 0 823 992 A2**
(43) Date de publication de la demande: **18.02.1998**
(21) Numéro de dépôt: 97401918.4
(22) Date de dépôt: 12.08.1997
(51) Int. Cl.: A01K 1/06

(54) **Dispositif pour le verrouillage des cornadis**

(30) Priorité: 13.08.1996 FR 9610165
(71) Demandeur: Etablissements Jourdain Société Anonyme, 45300 Pithiviers (FR)
(72) Inventeur: Simonneau, Francis, 45140 Saint Jean de la Ruelle (FR)
(74) Mandataire: Vander-Heym, Serge

(57) **Abrégé**

Dispositif de verrouillage pour cornadis du genre de ceux comportant une tringle (6), pivotante, portant des butées susceptibles de coopérer avec des organes mobiles (7-8) portés par les leviers pivotants (1), caractérisé en ce que chaque butée (9) est portée par un manchon cylindrique (10), traversé et entraîné en rotation par la tringle (6) et pouvant être engagé et immobilisé axialement dans un palier ouvert rendu solidaire du longeron supérieur (4) du cornadis.

## Description

La présente invention est relative à des perfectionnements concernant le verrouillage des cornadis automatiques.

Un cornadis est une barrière qui empêche l'animal d'accéder à l'auge et qui comporte des moyens pour le retenir devant l'auge si nécessaire.

Dans sa forme la plus simple, un cornadis comporte un longeron supérieur et un longeron inférieur réunis par des montants, l'espace séparant deux montants adjacents pouvant être réduit par un levier pivotant disposé obliquement lorsque l'accès à l'auge est autorisé.

Le levier pivotant peut être verrouillé, soit pour empêcher l'accès à l'auge soit pour maintenir une bête dans le cornadis pour lui permettre de s'alimenter ou pour l'examiner.

A cet effet, la partie supérieure du levier pivotant présente une fourche entre les ailes de laquelle passent le longeron supérieur et une tringle comportant des butées avec chacune desquelles peut coopérer un cliquet articulé entre les ailes de ladite fourche pour s'opposer au pivotement dudit levier.

La tringle précitée peut pivoter autour de son axe, cette manoeuvre étant effectuée lorsqu'on désire déverrouiller tous les leviers pivotants.

Il est évident que la tringle précitée, qui s'étend sur toute la longueur des cornadis, peut avoir une très grande longueur et que, de ce fait, plusieur paliers sont nécessaires. Par suite de la présence de ces paliers, la tringle doit être parfaitement lisse ce qui signifie que les butées précitées sont des pièces amovibles fixées à l'aide de vis et d'écrous sur ladite tringle avec tous les inconvénients que cela présente.

La présente invention, qui remédie à ces inconvénients, est remarquable en ce que la butée de verrouillage est portée par un manchon cylindrique, traversé librement par la tringle à laquelle il est lié en rotation, pouvant être engagé et immobilisé axialement dans un palier ouvert rendu solidaire du longeron supérieur.

La présente invention sera mieux comprise par la description qui va suivre faite en se référant aux dessins annexés à titre d'exemple indicatif, seulement, sur lesquels :
- la figure 1 est une vue en élévation d'un levier pivotant verrouillé au moyen d'une butée conforme à l'invention;

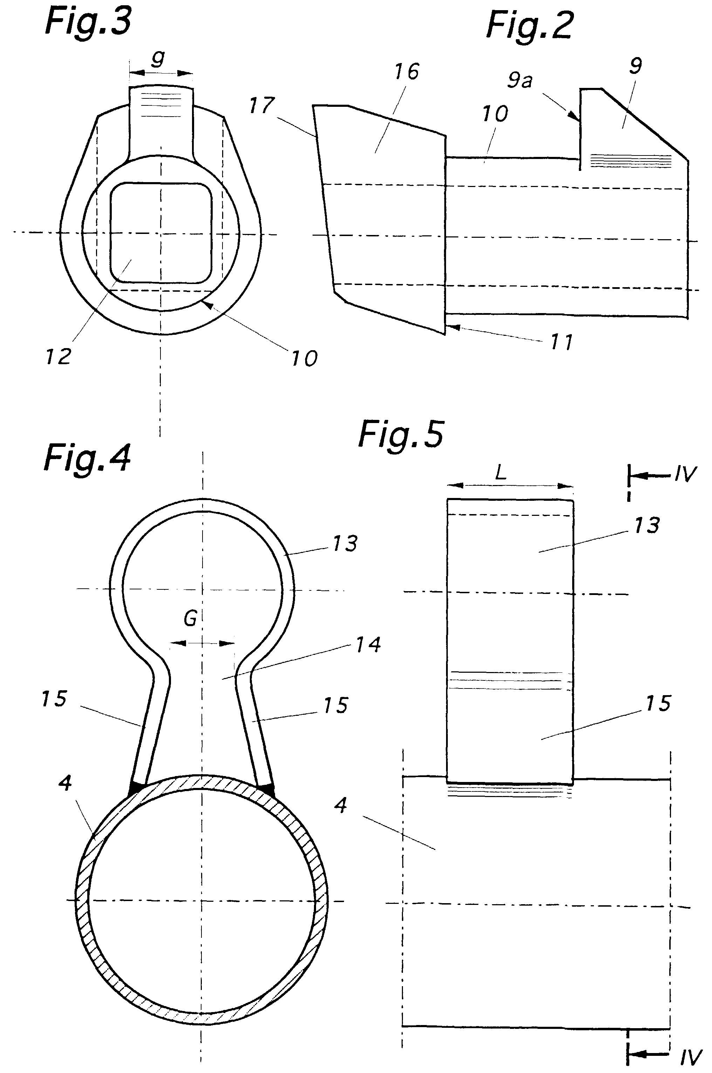

- la figure 2 montre, à plus grande échelle et en élévation, la butée de l'invention.
- la figure 3 est la vue de droite de la figure 2;
- la figure 4 est une vue en coupe, à plus grande échelle, effectuée selon la ligne IV-IV de la figure 5;
- la figure 5 est la vue de gauche de la figure 4;
- les figures 6 à 8 sont des vues, analogues à celle 1, montrant le montage du manchon-butée.

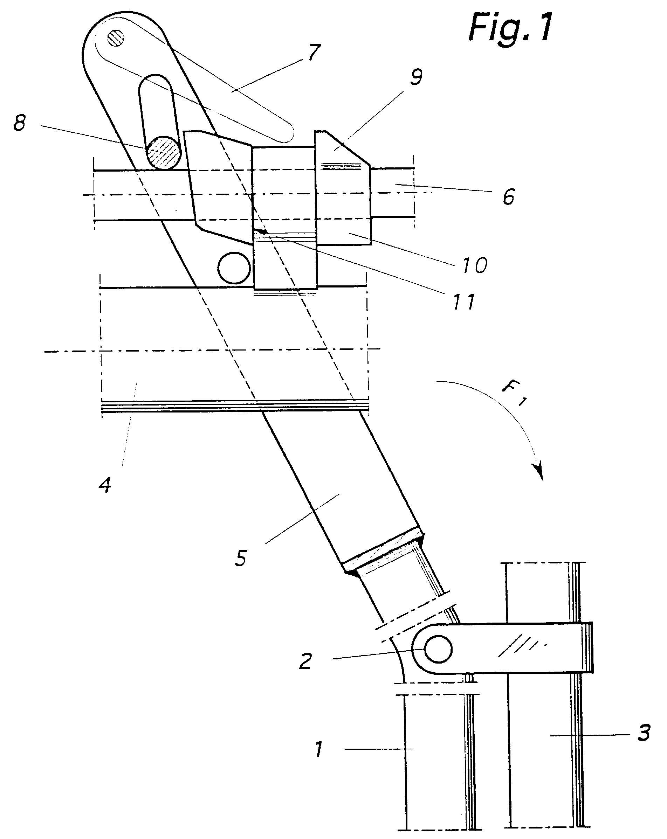

En se reportant à la figure 1, on voit que 1 est le levier pivotant usuel, articulé au moyen d'un axe 2 sur un montant 3 soudé par son extrémité supérieure sous le longeron supérieur 4 du cornadis.

De la façon connue, l'extrémité supérieure du levier 1 comporte une fourche 5 entre les branches de laquelle passent le longeron 4 et la tringle 6 de support des butées usuelles. Au-dessus de la tringle peut être disposé soit un doigt pivotant 7, soit un arbre coulissant 8, ces deux organes connus ayant pour effet, en coopérant avec une butée 9 portée par la tringle 6, de s'opposer au pivotement du levier 1 selon la flèche F₁.

Selon l'invention, la butée 9 est portée par un manchon cylindrique 10, présentant, à son extrémité opposée à celle comportant ladite butée, un épaulement 11 et, selon son axe longitudinal, un trou 12 de section polygonale, carré comme dans l'exemple représenté.

La tringle 6 présente une section analogue à celle du trou 12. De cette façon, lorsque le manchon est engagé sur la tringle 6, la rotation axiale de cette dernière détermine l'entraînement dudit manchon.

Chaque manchon est porté par un palier ouvert 13 présentant de part et d'autre de sa fente 14 une patte 15 permettant de le fixer sur le longeron 4.

La largeur g de la butée 9 est légèrement inférieure à celle **G** de la fente 14.

La distance séparant la face active 9a de la butée et l'épaulement 11 est légèrement supérieure à la longueur **L** du palier.

Pour monter les butées, on procède comme décrit ci-dessous.

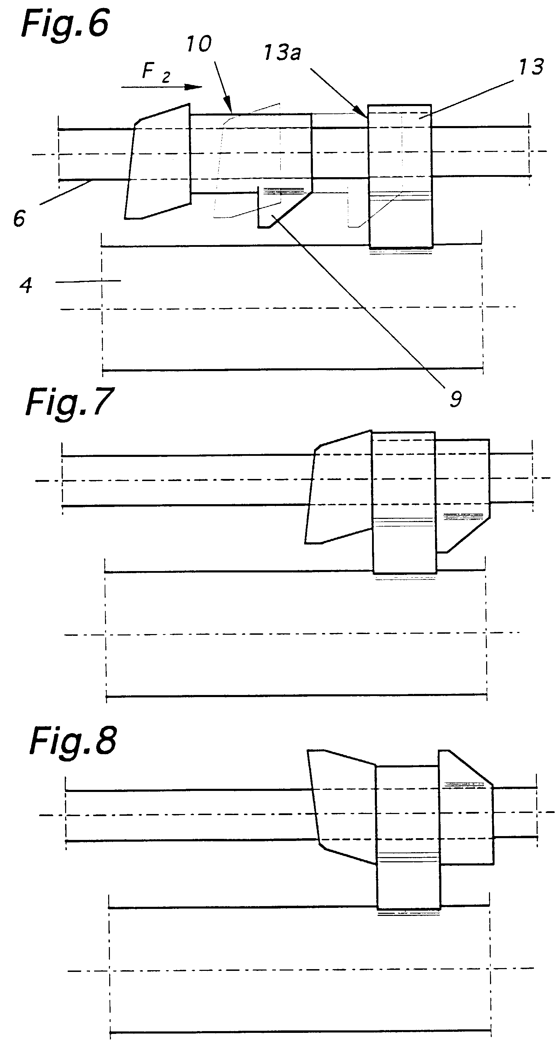

On engage la première butée 9-10 sur la tringle 6, puis on présente l'ensemble devant le premier palier en disposant la butée 9 vers le bas (figure 6). On pousse, alors, la butée selon la flèche F₂ jusqu'à ce que l'épaulement 11 prenne appui contre la face 13a du palier (figure 7).

A ce moment, on engage une seconde butée sur la tringle 6, pour le second palier, et ainsi de suite.

Lorsque toutes les butées sont en place, c'est-à-dire en appui contre les paliers, on les verrouille en faisant effectuer une rotation de cent quatre vingts degrés à la tringle 6 (figure 8). Cet angle de rotation est bien supérieur à celui qui sera nécessaire pour escamoter les butées lors du déverrouillage. Bien entendu et de la façon connue, la tringle 6 est immobilisée axialement.

Il est à noter que la mise en place des butées n'a pas nécessité l'emploi d'outils.

De préférence, le manchon-butée est réalisé en une matière plastique moulée de façon à absorber les bruits résultant des chocs et des vibrations.

Comme cela ressort tout particulièrement des dessins, le dispositif de l'invention convient aussi bien à un dispositif de verrouillage à doigt pivotant 7 qu'à un dispositif à arbre coulissant 8.

Dans le cas d'un dispositif de verrouillage à arbre coulissant, le manchon-butée 9-10 présente une tête 16 dont l'extrémité, opposée à l'épaulement 11, forme une surface de butée 17, convenablement inclinée pour s'opposer au soulèvement intempestif dudit arbre et s'étendant au-dessus de la tringle 6.

## Revendications

1. Dispositif de verrouillage pour cornadis du genre de ceux comportant une tringle (6), pivotante, portant des butées susceptibles de coopérer avec des organes mobiles (7-8) portés par les leviers pivotants (1), caractérisé en ce que chaque butée (9) est portée par un manchon cylindrique (10), traversé et entraîné en rotation par la tringle (6) et pouvant être engagé et immobilisé axialement dans un palier ouvert (13) rendu solidaire du longeron supérieur (4) du cornadis.

2. Dispositif selon la revendication 1, caractérisé en ce que le manchon (10) présente, à l'opposé de la butée (9), un épaulement (11), la distance séparant ledit épaulement et la face active de ladite butée étant légèrement supérieure à la longueur du palier.

3. Dispositif selon l'une quelconque des revendications 1 et 2, caractérisé en ce que la tringle (6) présente une section polygonale.

4. Dispositif selon l'une quelconque des revendications 1 à 3, caractérisé en ce que le palier (13) présente une fente longitudinale (14), à sa partie inférieure, dont la largeur est légèrement supérieure à l'épaisseur de la butée (9).

5. Dispositif selon l'une quelconque des revendications 1 à 4, caractérisé en ce que l'épaulement (11) est porté par une tête (16) dont l'extrémité, opposée audit épaulement, forme une surface de butée (17) pour un arbre coulissant (8).

6. Dispositif selon l'une quelconque des revendications 1 à 5, caractérisé en ce que le manchon-butée est réalisé en une matière plastique moulée.
